# FASCICULE DE BREVET EUROPEEN

(11) **EP 3 074 816 B1**
(45) Date de publication et mention de la délivrance du brevet: **12.09.2018**
(21) Numéro de dépôt: 14819042.4
(22) Date de dépôt: 28.11.2014
(51) Int. Cl.: G02F 1/37, G02F 1/39

(54) **GENERATEUR D'IMPULSIONS OPTIQUES COURTES A TRES HAUT CONTRASTE TEMPOREL**
GENERATOR FÜR KURZE OPTISCHE IMPULSE MIT SEHR HOHEM ZEITLICHEM KONTRAST
GENERATOR OF SHORT OPTICAL PULSES HAVING A VERY HIGH TEMPORAL CONTRAST

(30) Priorité: 28.11.2013 FR 1361741
(43) Date de publication de la demande: 05.10.2016
(73) Titulaire: Fastlite, 06560 Valbonne (FR)
(72) Inventeur: FORGET, Nicolas, 06000 Nice (FR)
(74) Mandataire: Mazabraud, Xavier
(86) Numéro de dépôt international: PCT/FR2014/053074
(87) Numéro de publication internationale: WO 2015/079181

(56) Documents cités:
- WO-A1-2005/112207
- US-A- 5 579 152
- Y Y LI ET AL: "Carrier-envelope phase stabilized high temporal contrast femtosecond laser source at 1053 nm", LASER PHYSICS LETTERS, vol. 10, no. 7, 23 mai 2013 (2013-05-23), page 075403, XP055167016, ISSN: 1612-2011, DOI: 10.1088/1612-2011/10/7/075403
- DORRER C ET AL: "HIGH-CONTRAST OPTICAL-PARAMETRIC AMPLIFIER AS A FRONT END OF HIGH-POWER LASER SYSTEMS", OPTICS LETTERS, OPTICAL SOCIETY OF AMERICA, vol. 32, no. 15, 23 juillet 2007 (2007-07-23), pages 2143-2145, XP001506852, ISSN: 0146-9592, DOI: 10.1364/OL.32.002143

## Description

La présente invention concerne un générateur d'impulsions optiques courtes à très haut contraste temporel.

D'une façon générale, on sait que les sources laser pulsées sont caractérisées par un confinement temporel de l'émission lumineuse. Ce confinement permet de réaliser des interactions laser-matière, dans des conditions combinant une durée très courte et une très forte puissance instantanée pour une énergie donnée de l'impulsion laser. La première caractéristique de cette impulsion est sa durée telle que définie par exemple par la séparation temporelle entre les deux instants où la puissance émise est la moitié de la puissance maximum (durée à mi-hauteur). Cette caractéristique n'est cependant pas suffisante pour définir les propriétés pertinentes de la source. En effet, l'existence de niveaux de puissance faibles, comme par exemple le millième de la puissance maximum, à des instants décalés de l'instant du maximum d'un délai significativement supérieur à la durée à mi-hauteur (par exemple quelques picosecondes), sont susceptibles de perturber profondément l'interaction laser-matière. A titre d'exemple, l'interaction d'une impulsion de densité de puissance élevée avec une cible solide sera totalement perturbée si l'impulsion centrale est précédée de niveaux de puissance parasites excédant la limite d'ionisation de l'atmosphère entourant la cible solide. Cette limite peut être très inférieure à la puissance maximum.

On sera donc amené à caractériser une source d'impulsion ultracourte par son contraste temporel. La notion de contraste temporel désigne le rapport d'intensité entre le maximum de l'éclairement lumineux en un point (exprimé en W ou W/cm²) et l'éclairement en ce même point mais à des instants différents. Le contraste se caractérise par différentes valeurs à différents délais par rapport à l'impulsion principale. Par exemple : 10⁴ à -3 ps et 10¹⁴ à -100ps.

A titre d'exemple de mécanismes susceptibles de produire des niveaux de puissance parasites dégradant le contraste, on peut citer :
- l'émission spontanée et l'émission spontanée amplifiée, présente dans tous les amplificateurs laser,
- la fluorescence paramétrique, présente dans tous les amplificateurs paramétriques optiques,
- les répliques de l'impulsion principale causées par les réflexions sur les surfaces optiques des milieux transparents traversés,
- les impulsions parasites ou résiduelles lorsque l'impulsion principale est prélevée sur un train d'impulsion,
- certains défauts d'amplitude ou de phase spectrale induits par le système d'amplification, le système de transport de faisceau, les traitements diélectriques (couches minces réflectives ou antireflets), ou encore par les défauts de surface des optiques utilisées dans les systèmes spectralement dispersifs (étireur par exemple),
- les effets non linéaires qui couplent et aggravent les mécanismes précités.

Le but de l'invention est de minimiser les effets précités. Une fois ces effets réduits au minimum pratique possible, il est désirable d'introduire dans la source des procédés améliorant le contraste. Une possibilité est d'utiliser un ou plusieurs effets d'optique non linéaire agencés de manière à ce que le rendement du dispositif soit plus intense autour du maximum d'intensité qu'à des temps éloignés de ce maximum en raison de la dépendance de ces effets en fonction de la puissance du signal incident.

La présente invention présente une source à haut contraste temporel construite autour d'une architecture d'amplificateur paramétrique optique. L'amplification d'impulsions lasers ultracourtes par effet paramétrique est décrite dans la littérature. Une impulsion « signal », de fréquence optique centrale f1, interagit dans un matériau présentant des propriétés optiques non linéaires avec une impulsion de puissance plus élevée (impulsion de « pompe ») et de fréquence optique f. Le contenu fréquentiel de l'impulsion « signal » doit être large pour permettre la production d'impulsions ultracourtes, l'impulsion de « pompe » étant généralement à bande spectrale plus étroite. Au cours de l'interaction, une partie de l'énergie de l'impulsion de «pompe» est transférée à l'impulsion «signal» qui est amplifiée. Simultanément, une troisième impulsion est générée et co-amplifiée. Cette troisième impulsion est désignée dans la littérature anglo-saxonne par le terme « idler » et les relations de conservation de l'énergie imposent à cette impulsion d'avoir pour fréquence centrale f2=f-f1.

Pour la génération d'impulsions à forte puissance, on combine le principe de l'amplification paramétrique avec celui de l'amplification à dérive de fréquence qui consiste à étendre temporellement l'impulsion « signal » et l'impulsion de « pompe » pour diminuer la puissance instantanée, le « signal » amplifié étant ultérieurement recomprimé pour obtenir une impulsion courte. On parle alors d'amplification paramétrique à dérive de fréquence, désignée par le sigle OPCPA (Optical Parametric Chirped Pulse Amplification) dans la littérature anglo-saxonne.

Il faut noter que le mécanisme de l'amplification paramétrique contribue par lui-même à l'amélioration du contraste, l'amplification n'ayant lieu qu'aux instants où l'impulsion de « pompe » est effectivement présente et intense.

Des sources de lumière combinant un tel amplificateur paramétrique avec des dispositifs d'optique non linéaire extérieurs comme un générateur de second harmonique ou un générateur de différence de fréquence dans le but d'augmenter la gamme des fréquences pouvant être couvertes ont été décrites dans la littérature (Miller et al., PCT WO 2005/112207 A1; "1.5 mJ, 6.4 fs parametric chirped-pulse amplification system at 1 kHz", S. Adachi et al., Optics Letters, September 1, 2007, vol. 32, n°17; "High contrast optical-parametric amplifier as a front end of high-power laser system", C. Dorrer et al., Optics letters, August 1, 2007, vol. 32, n°15). La présente invention utilise une telle combinaison, mais dans le but différent d'améliorer un contraste d'impulsion élevé. Une propriété singulière de l'invention, qui la distingue de l'art antérieur cité plus haut, est que la fréquence de sortie du dispositif est fixe et délibérément égale à celle d'entrée sur la voie « signal ». Il doit apparaître à l'homme de l'art que cette complication apparemment couteuse en énergie et en complexité n'est pas évidente et que la fonction optique de l'invention n'est pas celle d'une simple source optique secondaire.
Dans son principe, notre invention comporte en particulier les éléments suivants :
- Un amplificateur paramétrique faisant interagir une « pompe » de fréquence f avec une impulsion « signal » large bande centrée à une fréquence f1<f.
- Un filtre optique permettant d'extraire de la sortie dudit amplificateur paramétrique l'impulsion « idler » centrée à la fréquence f2=f-fl
- Un générateur de second harmonique permettant d'obtenir à partir de ladite impulsion « idler » une impulsion large bande centrée à la fréquence 2*(f-f1).

Selon ce principe, la valeur maximale de f1 est f, ce qui correspond à une fréquence de l' « idler » nulle. Pour un « signal » centré à la fréquence f1=2*f/3, la fréquence centrale de l'« idler » est f2=f-2*f/3=f/3. La sortie du générateur de second harmonique est, par conséquence, centrée à la fréquence 2*f/3=f1. Le choix de la fréquence centrale du « signal » (f1=2*f/3) est le seul permettant, au moyen d'une différence de fréquence suivie d'une génération de seconde harmonique, de retrouver la fréquence centrale d'origine. Ce choix constitue également un optimum pour générer des impulsions de grande bande spectrale tout en maintenant la possibilité de séparer de manière efficace les signaux concernés dans une géométrie où les faisceaux « pompe », « signal », et « idler » se propagent dans une même direction. Le non-recouvrement des bandes spectrales « signal » et « idler » autorise en effet l'usage de miroirs dichroïques. La géométrie d'interaction colinéaire entre les faisceaux permet, quant à elle, de garantir une bonne qualité spatiale de faisceaux.

Si la source du « signal » à la fréquence f1 était indépendante du laser de « pompe » à la fréquence f, la réalisation de l'invention demanderait un mécanisme complexe de synchronisation entre ces deux sources laser, afin d'assurer qu'elles soient simultanément présentes dans l'amplificateur paramétrique. Une réalisation préférée de l'invention consiste donc à générer, par exemple, la source du « signal » à partir de l'impulsion de « pompe », selon une procédure décrite par exemple par Cerullo et al. (« Ultrafast optical parametric amplifiers », Rev. Sci. Instrum. 74, 1 (2003)) Plusieurs mécanismes à base d'optique non-linéaire sont connus pour générer une impulsion large bande à partir d'une impulsion intense de bande spectrale plus étroite et de fréquence centrale différente. Il s'agit par exemple de l'interaction non linéaire avec le verre dans une fibre optique, de l'interaction non linéaire avec un cristal massif ou de l'interaction avec un gaz dans une fibre creuse. On utilisera une interaction de ce type pour générer à partir de la « pompe » de fréquence f une impulsion de spectre large incluant la fréquence 2*f/3. Un filtre spectral peut extraire de ce spectre large les fréquences destinées à former l'impulsion « signal » qui est ensuite amplifiée par l'amplificateur paramétrique.

Une seconde possibilité est de générer la source de « pompe » à partir d'une impulsion « signal » par un mécanisme équivalent : on utilise une interaction non linéaire pour générer à partir du « signal » de fréquence 2*f/3 une impulsion de spectre large incluant la fréquence f. Un filtre spectral extrait de ce spectre large les fréquences destinées à former l'impulsion « pompe » qui est ensuite amplifiée par des amplificateurs laser de puissance.

Une troisième possibilité, décrite, par exemple, par Adachi et al. (« 1.5 mJ, 6.4 fs parametric chirped-pulse amplification system at 1 kHz », Optics Letters, Vol. 32, Issue 17, pp. 2487-2489 (2007)) est de partir d'une source générant des impulsions possédant une bande spectrale couvrant à la fois la fréquence f et la fréquence 2*f/3. Un filtre spectral extrait de ce spectre large initial un intervalle de fréquences ensuite amplifié par des amplificateurs laser de puissance et enfin converti par génération de seconde harmonique pour former l'impulsion « pompe ». Un second filtre spectral extrait du spectre large initial les fréquences destinées à former l'impulsion « signal » qui est ensuite amplifiée par l'amplificateur paramétrique.

En résumé le principe de l'invention permet, à partir d'une impulsion de «pompe» de spectre étroit et de fréquence f, d'augmenter le contraste temporel d'une impulsion synchrone de spectre large centré à la fréquence f1=2*f/3. Un haut contraste temporel étant assuré par les éléments suivants :
- le principe de l'amplification paramétrique qui n'est opérant que pendant la durée de la pompe,
- les filtrages de bande autour des fréquences f1 puis f2=f-f1, puis 2*f2=f1, qui réduisent les signaux parasites issus de la pompe et des autres fréquences présentes,
- la génération de second harmonique qui réduit tout les signaux de faible puissance en dehors de l'impulsion principale.

Selon l'invention, un système pour générer des impulsions optiques courtes à très haut contraste temporel, de spectre centré à une longueur d'onde λ, utilisant le principe de l'amplification paramétrique est caractérisé en ce qu'il comprend :
- un premier générateur d'impulsions optiques délivrant des impulsions d'une durée inférieure à 10 picosecondes à une longueur d'onde sensiblement égale à λ,
- un second générateur d'impulsions optiques délivrant des impulsions d'une durée inférieure à 10 picosecondes à une longueur d'onde sensiblement égale à 2*λ/3,
- un dispositif de recombinaison pour recombiner colinéairement les impulsions issues du premier et deuxième générateur,
- un dispositif d'amplification paramétrique recevant en entrée la sortie dudit dispositif de recombinaison,
- un filtre extrayant de la sortie du dispositif d'amplification paramétrique une bande centrée à une longueur d'onde sensiblement égale à 2*λ,
- un générateur de second harmonique recevant en entrée la sortie dudit filtre précédent,
- un autre filtre centré à une longueur d'onde sensiblement égale à λ, extrayant les longueurs d'onde de second harmonique des impulsions produites par ledit générateur de second harmonique.

Le premier générateur d'impulsions optiques peut utiliser des moyens d'amplification par des matériaux dopés aux ions Erbium.

Selon un premier mode de réalisation, le premier générateur d'impulsions optiques et le deuxième générateur d'impulsions optiques peuvent être deux sources différentes, le système comprenant en outre des moyens pour synchroniser ces sources.

Selon un deuxième mode de réalisation, le premier générateur d'impulsions peut comprendre des moyens non linéaires pour délivrer des impulsions d'une durée inférieure à 10 picosecondes à une longueur d'onde sensiblement égale à λ à partir des impulsions de longueur d'onde sensiblement égale à 2*λ/3 fournies par le deuxième générateur d'impulsions.

Selon un troisième mode de réalisation, le deuxième générateur d'impulsions comprend des moyens non linéaires pour délivrer des impulsions d'une durée inférieure à 10 picosecondes à une longueur d'onde sensiblement égale à 2*λ/3 à partir des impulsions de longueur d'onde sensiblement égale à λ fournies par le premier générateur d'impulsions.

Un système selon l'invention peut en outre comprendre :
- des dispositifs additionnels de contrôle du délai et de la phase disposés avant les dispositifs de recombinaison, afin d'optimiser les effets non linéaires dans le dispositif d'amplification paramétrique ; et, de préférence,
- des dispositifs additionnels de contrôle du délai et de la phase au sein du filtre disposé à la sortie du dispositif d'amplification paramétrique, afin d'optimiser les effets non linéaires dans le générateur de second harmonique.

L'invention porte aussi sur un système pour générer des impulsions optiques courtes à très haut contraste temporel, de spectre centré à la longueur d'onde λ/2, caractérisé en ce qu'il utilise un système pour générer des impulsions optiques courtes à très haut contraste temporel, de spectre centré à une longueur d'onde λ selon l'invention et en outre un autre générateur de second harmonique.

Avantageusement, un tel système comprend des moyens pour générer une longueur d'onde λ/2 compatible avec une amplification par l'usage de matériau saphir dopé Titane.

Plusieurs modes de mise en oeuvre d'un système selon l'invention sont décrits ci-après, à titre d'exemples non limitatifs, avec référence aux dessins annexés dans lesquels :
Les figures 1a et 1b sont une représentation schématique d'un exemple de réalisation d'un système selon l'invention ;
La figure 2 illustre schématiquement les spectres obtenus aux diverses étapes du système de la figure 1 ; et,
Les figures 3-1 à 3-7 sont des représentations schématiques de différents autres modes d'implémentation de l'invention.

L'invention sera mieux comprise en considérant l'exemple de réalisation suivant présenté sur les figures la et 1b.

Comme illustré à la figure la, un système 1 selon l'invention comprend en premier lieu une source de pompe P. La source de pompe P est constituée par une chaine de génération/amplification d'impulsions à base de matériaux amplificateurs contenant des ions Ytterbium. Elle émet des impulsions intenses à une fréquence notée f. Dans l'exemple illustré, la longueur d'onde correspondant est de 1030 nm.

La sortie optique de cette source est divisée par un séparateur BS en faisceaux injectés respectivement dans deux bras B1 et B2.

Le faisceau du bras B1 est focalisé dans un cristal de YAG (Neodimium Doped Yttrium Aluminum Garnet) permettant de générer un supercontinuum (SC) couvrant au moins la plage 1300-1900nm. La sortie de ce supercontinuum est injectée dans un filtre F1 permettant de sélectionner un signal centré sur une fréquence f1=2*f/3. Dans l'exemple illustré, la fréquence f1 correspond à une longueur d'onde égale à 1545 nm. Le faisceau du bras B1 sert de voie « signal ».

Le faisceau du bras B2 sert de voie de « pompe ».

Ces deux faisceaux sont combinés colinéairement dans un dispositif de recombinaison R et injectés dans un dispositif d'amplification paramétrique A. Avantageusement, les impulsions « signal » et « pompe » ont, avant recombinaison, été modifiées par des dispositifs de contrôle du délai et de la phase (DCDP) pour obtenir un recouvrement temporel optimal des impulsions des bras B1 et B2, afin d'optimiser le mécanisme d'amplification paramétrique à dérive de fréquence. Avantageusement, le dispositif d'amplification paramétrique A est à base d'un cristal de Niobate de Lithium dopé MgO, dont la polarisation est périodiquement renversée (« Periodically Poled Lithium Niobate »). Ce type de dispositif assure un quasi accord de phase entre les impulsions à 1030 nm, centrées sur la fréquence f, et celles comprises dans la bande 1300-1900nm, centrées sur la fréquence f1, permettant l'amplification sur une grande bande spectrale et en configuration colinéaire d'un « signal » centré sur la fréquence f1, ici correspondant à la longueur d'onde de 1545 nm.

La sortie « idler » centrée à 3090 nm est sélectionnée par un filtre F2 constitué d'un ou plusieurs miroirs dichroïques. La sortie ainsi sélectionnée est injectée dans un cristal non linéaire NL2 également du type MgO : PPLN opérant en générateur de second harmonique. Un filtre F3 de type passe-bas sélectionne la bande spectrale <2000 nm correspondant au second harmonique, centrée à 1545 nm qui est la longueur d'onde « signal » d'origine, correspondant à la fréquence f1.

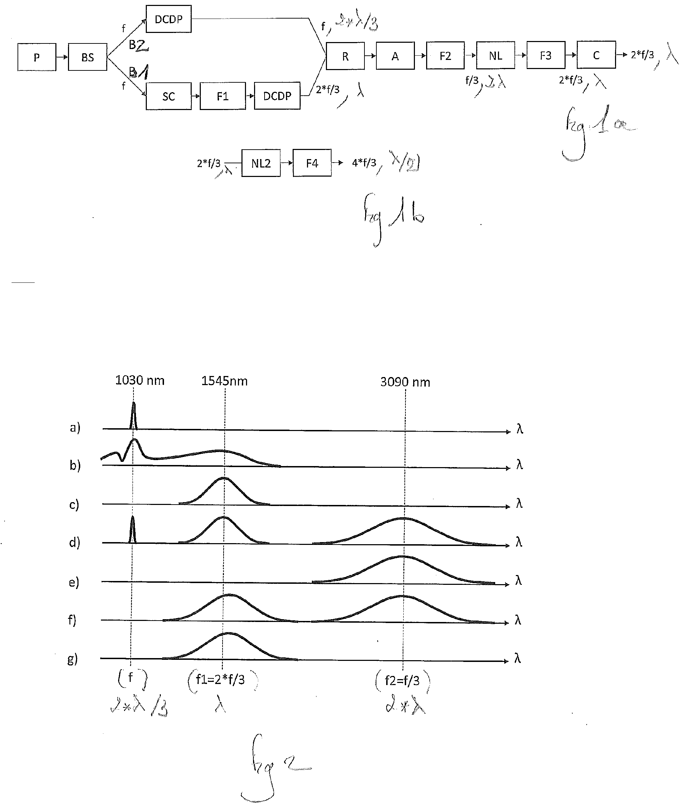

La figure 2 montre schématiquement les spectres obtenus aux diverses étapes du système :
- Le spectre 2a est le spectre de la pompe ;
- Le spectre 2b est le spectre du supercontinuum ;
- Le spectre 2c est le spectre obtenu à la sortie du filtre F1 ;
- Le spectre 2d est le spectre obtenu à la sortie de l'amplificateur paramétrique A ;
- Le spectre 2e est le spectre obtenu à la sortie du filtre F2 ;
- Le spectre 2f est le spectre obtenu à la sortie du générateur de second harmonique NL ; et,
- Le spectre 2g est le spectre obtenu à la sortie du filtre F3.

La sortie du filtre F3 est injectée dans un compresseur C pour obtenir une des impulsions courtes à partir des impulsions à dérive de fréquence.

Les impulsions ainsi générées peuvent être utilisées directement en tant qu'impulsions infrarouges ultracourtes à haut contraste. Elles peuvent également, comme schématisé sur la figure 1b, être injectées dans un dispositif de génération de second harmonique NL2 et filtrées par un filtre F4 pour obtenir des impulsions centrées à environ 772 nm, correspondant à une fréquence égale à 4*f/3, qui peuvent alors être amplifiées par des amplificateurs régénératifs à base de cristaux de Saphir dopé Titane.

L'invention ainsi utilisée est une alternative aux techniques d'amélioration du contraste des amplificateurs régénératifs. L'invention permet par ailleurs d'obtenir un contraste très élevé par les effets successifs de l'amplification paramétrique et des deux étages de génération de second harmonique.

Avantageusement, l'invention pourra comprendre des moyens, disponibles dans l'état de l'art, pour :
- garantir une synchronisation stable entre les impulsions des bras B1 et B2 ainsi qu'une relation de phase stable entre ces impulsions,
- stabiliser passivement et/ou activement la phase absolue des impulsions,
- garantir une compression optimale avant NL2,
- ajuster la largeur spectrale des filtres et, en conséquence, adapter la durée des impulsions.

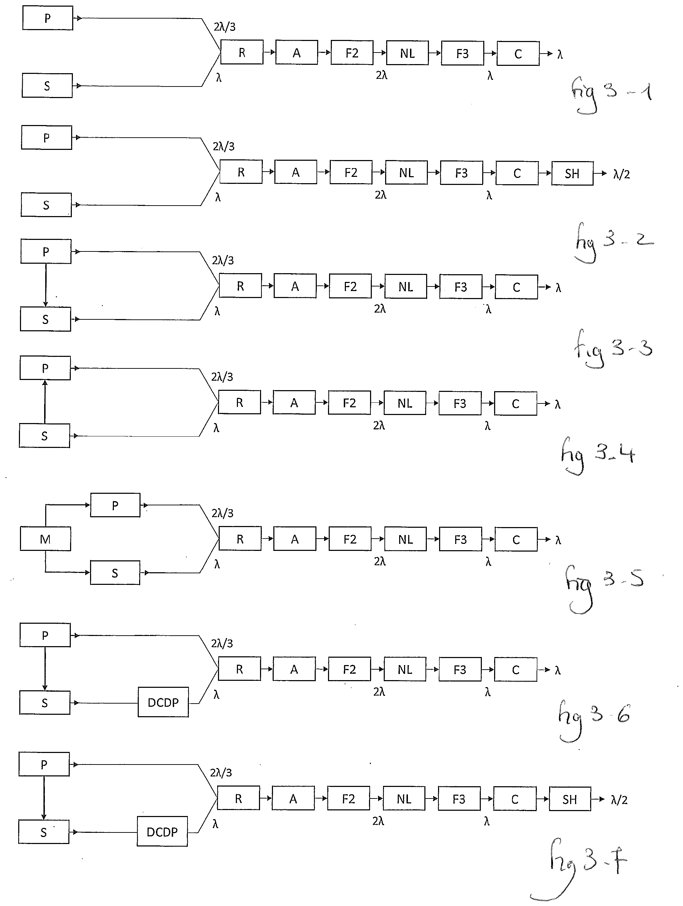

Les impulsions issues des bras B1 et B2 peuvent être, sans perte de généralité, issues de deux sources optiques synchrones, ci-après nommées générateurs S et P. Par souci de clarté, nous résumons les modalités d'implémentation et d'application de l'invention dans les représentations schématiques des figures 3-1 à 3-7 :
- La figure 3-1 présente une réalisation de l'invention avec deux générateurs indépendants P et S ;
- La figure 3-2 présente une réalisation de l'invention, avec deux générateurs indépendants P et S et une génération de seconde harmonique SH ;
- La figure 3-3 présente une réalisation de l'invention où le générateur S est produit à partir du générateur P ;
- La figure 3-4 présente une réalisation de l'invention où le générateur P est produit à partir du générateur S ;
- La figure 3-5 présente une réalisation de l'invention où les générateurs S et P sont synchronisés par un mécanisme M de nature optique, électronique ou mécanique ;
- La figure 3-6 présente une réalisation de l'invention où le générateur S est produit à partir du générateur P, incluant un dispositif de contrôle du délai et de la phase (DCDP) entre S et R et au sein de F2 pour optimiser les effets non linéaires dans le dispositif A et NL ;
- La figure 3-7 présente une réalisation de l'invention où le générateur S est produit à partir de P, incluant un dispositif de contrôle du délai et de la phase (DCDP) et incluant une génération de seconde harmonique (SH).

Bien sûr, l'invention n'est pas limitée aux exemples qui viennent d'être décrits.

## Revendications

1. Système d'impulsions optiques courtes à très haut contraste temporel de spectre centré à la longueur d'onde λ, utilisant le principe de l'amplification paramétrique et comprenant :
- un premier générateur (S) d'impulsions optiques délivrant des impulsions d'une durée inférieure à 10 picosecondes à une longueur d'onde approximativement égale à λ,
- un second générateur (P) d'impulsions optiques délivrant des impulsions d'une durée inférieure à 10 picosecondes à une longueur d'onde approximativement égale à 2*λ/3,
- un dispositif (R) recombinant colinéairement les impulsions issues des générateurs (S) et (P),
- un dispositif d'amplification paramétrique (A) recevant en entrée la sortie dudit dispositif (R),
- un filtre (F2) extrayant de la sortie dudit dispositif d'amplification (A) une bande centrée à une longueur d'onde approximativement égale à 2*λ,
- un générateur de second harmonique (NL) recevant en entrée la sortie dudit filtre (F2),
- un filtre (F3) centrée à une longueur d'onde approximative égale à λ extrayant les longueurs d'onde de second harmonique des impulsions produites par le dit générateur.

2. Système selon la revendication 1, **caractérisé en ce que** le générateur (P) utilise l'amplification par des matériaux dopés aux ions Ytterbium.

3. Système d'impulsions optiques courtes à très haut contraste temporel, de spectre centré à la longueur d'onde λ/2, utilisant un générateur d'impulsions de spectre centré à la longueur d'onde λ selon la revendication 1 et un autre générateur de second harmonique (SH).

4. Système selon la revendication 3 **caractérisé par le fait que** la dite longueur d'onde λ/2 est compatible avec l'amplification par l'usage de matériau saphir dopé Titane.

5. Système selon la revendication 1 dans lequel le générateur (S) est obtenu à partir du générateur (P) par un processus optique non linéaire.

6. Système selon la revendication 1 dans lequel le générateur (P) est obtenu à partir du générateur (S) par un processus optique non linéaire.

7. Système selon la revendication 1 comprenant un mécanisme permettant de synchroniser les impulsions issues des générateurs (S) et (P).

8. Système selon la revendication 1, comprenant additionellement :
- des dispositifs additionnels de contrôle du délai et de la phase entre le premier générateur (S) et le dispositif (R) pour optimiser les effets non linéaires dans le dispositif (A),
- des dispositifs additionnels de contrôle du délai et de la phase au sein du filtre (F2) pour optimiser les effets non linéaires dans le générateur de second harmonique (HL) recevant en entrée la sortie dudit filtre (F2).

## Patentansprüche

1. System für kurze optische Impulse mit sehr hohem Zeitkontrast des auf die Wellenlänge λ zentrierten Spektrums unter Anwendung des Prinzips der parametrischen Verstärkung, umfassend:
- einen ersten optischen Impulsgenerator (S), der Impulse einer Dauer von weniger als 10 Pikosekunden bei einer Wellenlänge von annähernd gleich λ liefert,
- einen zweiten optischen Impulsgenerator (P), der Impulse einer Dauer von weniger als 10 Pikosekunden bei einer Wellenlänge von annähernd gleich 2*λ/3 liefert,
- eine Vorrichtung (R), die die von den Generatoren (S) und (P) erzeugten Impulse kolinear rekombiniert,
- eine Vorrichtung (A) zur parametrischen Verstärkung, die an ihrem Eingang die Ausgabe der Vorrichtung (R) empfängt,
- ein Filter (F2), das aus der Ausgabe der Verstärkungsvorrichtung (A) ein Band extrahiert, das auf eine Wellenlänge von annähernd gleich 2*λ zentriert ist,
- einen Generator (NL) zur Erzeugung einer zweiten Harmonischen, der an seinem Eingang die Ausgabe des Filters (F2) empfängt,
- ein auf eine Wellenlänge von annähernd gleich A zentriertes Filter (F3), das die Wellenlängen der zweiten Harmonischen der von dem genannten Generator erzeugten Impulse extrahiert.

2. System nach Anspruch 1, **dadurch gekennzeichnet, dass** der Generator (P) die Verstärkung durch Materialien nutzt, die mit Ytterbiumionen dotiert sind.

3. System für kurze optische Impulse mit sehr hohem Zeitkontrast des auf die Wellenlänge λ/2 zentrierten Spektrums unter Anwendung eines Impulsgenerators des auf die Wellenlänge λ zentrierten Spektrums gemäß Anspruch 1 und eines weiteren Generators (SH) zur Erzeugung einer zweiten Harmonischen.

4. System nach Anspruch 3, **dadurch gekennzeichnet, dass** die Wellenlänge λ/2 kompatibel ist mit der Verstärkung durch die Nutzung des mit Titan dotierten Materials Saphir.

5. System nach Anspruch 1, wobei der Generator (S) ausgehend von dem Generator (P) durch einen nichtlinearen optischen Prozess erhalten wird.

6. System nach Anspruch 1, wobei der Generator (P) ausgehend von dem Generator (S) durch einen nichtlinearen optischen Prozess erhalten wird.

7. System nach Anspruch1, umfassend einen Mechanismus zum Synchronisieren der von den Generatoren (S) und (P) erzeugten Impulse.

8. System nach Anspruch 1, ferner umfassend:
- weitere Vorrichtungen zum Steuern der Zeit und der Phase zwischen dem ersten Generator (S) und der Vorrichtung (R), um die nichtlinearen Effekte in der Vorrichtung (A) zu optimieren,
- weitere Vorrichtungen zum Steuern der Zeit und der Phase innerhalb des Filters (F2), um die nichtlinearen Effekte in dem Generator (HL) zur Erzeugung einer zweiten Harmonischen zu optimieren, der an seinem Eingang die Ausgabe des Filters (F2) empfängt.

## Claims

1. System of short optical pulses having a very high temporal contrast spectrum about the wavelength λ, using the principle of parametric amplification and comprising:
- a first generator (S) of optical pulses outputting pulses with a duration less than 10 picoseconds at a wavelength approximately equal to λ,
- a second generator (P) of optical pulses outputting pulses with a duration less than 10 picoseconds at a wavelength approximately equal to 2*λ/3,
- a device (R) for collinearly recombining the pulses from the generators (S) and (P),
- a parametric amplification device (A) receiving as input the output of said device (R),
- a filter (F2) extracting from the output of said amplification device (A) a band centred about a wavelength approximately equal to 2*λ,
- a second harmonic generator (NL) receiving as input the output of said filter (F2),
- a filter (F3) centred about a wavelength approximately equal to λ extracting the wavelengths of the pulses produced by said generator.

2. System according to claim 1, **characterised in that** the generator (P) uses amplification by Ytterbium ion-doped materials.

3. System of short optical pulses having a very high temporal contrast spectrum centred about the wavelength λ/2, using a pulse spectrum generator centred about the wavelength λ according to claim 1 and another second harmonic generator (SH).

4. System according to claim 3 **characterised by** the fact that said wavelength λ/2 is compatible with the amplification through the use of Titanium-doped sapphire material.

5. System according to claim 1 wherein the generator (S) is obtained from the generator (P) by a non-linear optical process.

6. System according to claim 1 wherein the generator (P) is obtained from the generator (S) by a non-linear optical process.

7. System according to claim 1 comprising a mechanism that makes it possible to synchronise the pulses coming from the generators (S) and (P).

8. System according to claim 1, additionally comprising:
- additional devices for controlling the delay and the phase between the first generator (S) and the device (R) in order to optimise the non-linear effects in the device (A),
- additional devices for controlling the delay and the phase in the filter (F2) in order to optimise the non-linear effects in the second harmonic generator (HL) receiving as input the output of said filter (F2).
